# EUROPEAN PATENT APPLICATION

(11) **EP 2 395 734 A1**
(43) Date of publication of application: **14.12.2011**
(21) Application number: 10290306.9
(22) Date of filing: 08.06.2010
(51) Int. Cl.: H04M 1/23, H04M 1/67, H04M 1/677, G06F 1/16

(54) **Communication handset with keypad lock**

(71) Applicant: Alcatel Lucent, 75007 Paris (FR)
(72) Inventor: Rajan, Govinda N., 1273 KR Huizen (NL)
(74) Representative: Cockayne, Gillian

(57) **Abstract**

A communications handset (1) comprises a housing (2) having a plurality of sides (4-7), a first detector (12-15) included on a first side of the plurality and a second detector (12-15) on a respective different second side of the plurality, the first and second detectors being operative such that, when they are activated simultaneously, call capability of the handset is initiated. Thus, instances of accidentally making a call without user intervention may be reduced or eliminated.

## Description

### FIELD OF THE INVENTION

The present invention relates to a communications handset, and more particularly, but not exclusively, to a mobile telephone handset.

### BACKGROUND

Many models of mobile phone handsets include a quick dialing facility, for example, for re-dialing the last number, dialing using a reduced number of buttons for numbers included in a saved list of contacts or for calling emergency services. Although this is convenient for the user, this feature may also lead to problems as it can be possible for a mobile phone handset to dial a number accidentally without its user intending to make a call. For example, if the handset is carried in a pocket or bag, it may be moved around and impact with the container, or with another object carried in the container, in such a way that buttons or a touch screen on the handset are activated. This may result in the handset attempting to make a call without the user's involvement and is more likely when a quick dialing facility is implemented. A call made inadvertently in this manner may be embarrassing or inconvenient. For example, the phone may remain connected to the called number following the inadvertent dialing, allowing the called party to overhear the handset user who is unaware of it, incurring billing charges or used airtime minutes on a call plan, or a called party may try to return a call, thinking that the user of the handset had been trying to reach them.

Mobile phone handsets may allow the keypad or touch screen to be locked, for example, by pressing a combination of buttons simultaneously or in a given sequence. This requires the user to remember to lock the phone each time it is no longer required. However, even when locked, inadvertent phone dialing may happen in some cases. For example, the handset may be set up such that, when a call is received, the lock is automatically released. If the call goes unanswered, the user may be unaware that the lock is no longer in effect.

Some mobile phone handsets have a dedicated button to allow immediate, one-touch dialing of emergency services such as police, medical or fire services, for example, or for other types of alarm. In one variant, one of the number buttons, such as the number "9" button, is programmed to dial an emergency number if it is pressed continuously. If a mobile phone handset does not have a dedicated button, the user may program a single button as an alarm number or an alarm call may be implemented by a limited set of button presses or touches to provide a quick method to make such a call, even under difficult or pressurized conditions. Accidental dialing is particularly detrimental where the called number is an alarm number of some kind. A responding emergency service cannot be sure that the call has been placed in error and must investigate, taking up resources that could be better used in dealing with genuine emergencies.

In some mobile phone handsets, an alarm button remains active even when a keypad lock is applied. This enables a user to always have the ability to call emergency services even if a numeric password has been forgotten, is unknown or if the user is incapacitated or confused.

### BRIEF SUMMARY

According to the invention, a communications handset comprises a housing having a plurality of sides, a first detector included on a first side of the plurality and a second detector on a respective different second side of the plurality, the first and second detectors being operative such that, when they are activated substantially simultaneously, call capability of the handset is initiated. As the detectors are located on different sides of the housing, it is less likely that they will be simultaneously activated when the handset is being carried in a bag, for example, than a keypad or touch screen located on a single face of a housing. Accordingly, instances of accidentally making a call without user intervention may be reduced or eliminated by employing the invention as activation of both detectors is need to initiate call capability. The sides of the housing may have a sharp boundary or the housing may, for example, have more smoothly curved transitions from one side to an adjacent side. The sides in the latter case may be distinguished from one another as they are extensive in substantially different planes.

The first and second detectors may be responsive to the same type of activation but alternatively they could be different types of detectors. In one embodiment of the invention, at least one of the first and second detectors is a sensor responsive to touch. For example, the sensor may be responsive to human skin conductivity, a piezoelectric transducer, temperature responsive or based on some other kind of response. In another embodiment, at least one of the first and second detectors is mechanically activated, such as a push button or slider, for example. A mechanically activated detector may be activated by depressing it, for example.

In one embodiment, the handset is operative such that, following initiation of call capability, it is unnecessary to maintain activation of the first and second detectors for a call to continue. In another embodiment, the handset may be such that continuing activation of the first and second detectors is required to maintain the call. However, this is less likely to be as convenient. The handset may designed so that the user is able to chose which setting to use.

The location of the detectors on the housing is conveniently chosen such that they will be activated when a user holds the handset in a usual manner to make a call. The manner of holding the handset may be different for placing a voice call and for making a data call, when the user may wish to look at a display on the handset. It may be sufficient to place the detectors so that they will be activated when the handset is picked up by the user prior to making a call, for example.

In one embodiment, the housing is substantially cuboid having a front face with a user keypad and/or touch screen and at least one of the first and second sides where the detectors are located is adjacent the front face. For example, the housing may have four sides adjacent the front face and a detector, or more than one detector, is included on each of the four adjacent sides.

In one embodiment, where the handset is substantially cuboid having a front face, one of the first and second sides is a rear face on the opposite side of the housing to the front face.

In one embodiment, the handset includes a dedicated alarm key for connecting to an emergency service and the alarm key is not operable until the first and second detectors are activated substantially simultaneously to initiate call capability of the hand set.

There may be more than two detectors included on two or more sides of the housing and they may be operative such that simultaneous activation of more than two detectors is required to initiate call capability, providing that at least two of those activated are on respective different sides of the housing. A facility may be provided to enable the user to program the number of detectors that may be used from those available, for example, only some of them or alternatively all of them, and/or to select specific ones of those available. For example, a user may wish to choose those detectors which match his usual manner of holding the handset in use. In one embodiment, there is a pre-programmed factory set option and this may be adjusted later by the user later if wished.

### BRIEF DESCRIPTION OF THE DRAWINGS

Some embodiments of the present invention will now be described by way of example only, and with reference to the accompanying drawings, in which:
Figure 1 schematically illustrates a handset in accordance with the invention;
Figure 2 schematically illustrates the rear face of the handset shown in Figure 1; and
Figure 3 schematically illustrates circuitry for the handset of figures 1 and 2.

### DETAILED DESCRIPTION

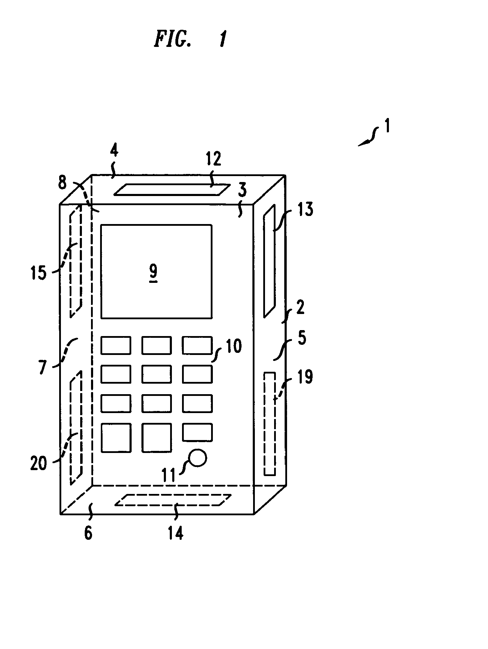

With reference to Figure 1, a mobile telephone handset 1 has a substantially cuboid shaped housing 2. It includes a front face 3, four sides 4, 5, 6 and 7 and a rear face 8. A display 9 is located on the front face 3 , together with a keypad 10. The keypad may comprise buttons, as shown, or in an alternative embodiment, touch-sensitive regions. The keys of the keypad 10 include a dedicated alarm button 11. If the alarm button 11 is depressed, it causes the handset 1 to dial an emergency service number such as 911 or 999.

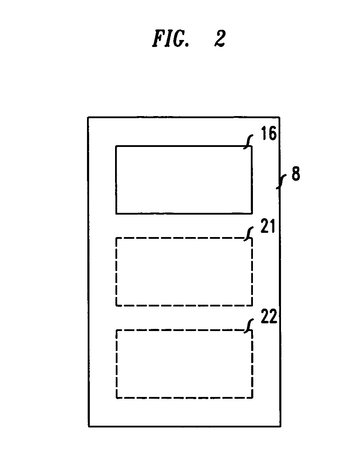

A detector 12, 13, 14 and 15 is included on each of the four sides 4, 5, 6 and 7 respectively. As shown in Figure 2, another detector 16 is located on the rear face 8.

Each detector is touch sensitive. In this case, each detector includes a piezoelectric sensor. When the handset keypad 10 is locked, which may be done by the user, for example, the keypad 14 will not accept any input and the emergency alarm button 11 is inactive. Thus, the handset is incapable of making any calls.

If the user handles the handset 1 and simultaneously, or nearly simultaneously, touches at least two of the detectors, the keypad 10 is unlocked and the alarm button 11 enabled.

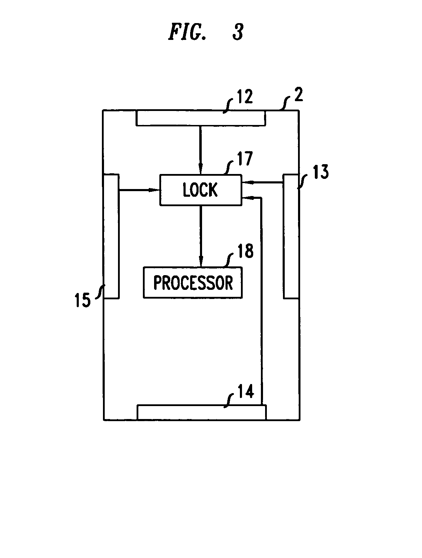

With reference to Figure 3, each of the detectors, four of which 12, 13, 14 and 15 are shown, is electrically connected to a locking circuit 17. Detection of applied pressure by a detector results in a signal being transmitted from that detector to the locking circuit 17. Simultaneous receipt by the locking circuit 17 of signals from at least two of the detectors causes the locking circuit 17 to send a keypad activation signal to a processor 18. On receipt of the keypad activation signal, the processor 18 unlocks the keypad 10 if it had previously been locked and the alarm button 11 is enabled. Thus call capability of the handset 1 is initiated The locking circuit 17 may be arranged such that near-simultaneous reccipt of the signals from the detectors is also effective in unlocking the keypad providing the signals are received in a given time window.

In another embodiment, additional detectors are included so that touch is sensed over a wider area of the housing 2. Such additional detectors are indicated in broken lines at 19 and 20 on two sides 5 and 7 of the housing and at 21 and 22 on the rear face of the housing. Two of the additional detectors 19 and 20 are mechanical push buttons. In this embodiment, receipt of signals from at least two of the detectors located on at least two different sides of the handset, for example, from detector 21 and detector 13 initiates call capability. The handset may be operative so that touch responsive signals from only two detectors are required to place the handset in call capable mode or, in an alternative embodiment, signals from more than two detectors are required.

In an embodiment, the user is able to program the number of detectors that must be activated in order to make it call capable. Thus, in one particular example, the user may be able to choose to use, say, two, three, four detectors up to the maximum available. In one embodiment, the user is able to select which detectors are included in the at least two detectors required to initiate call capability providing there are at least two on respective different sides. Thus, where detectors are included on four sides adjoining the front face and on the rear face, in the embodiment shown in Figures 1 and 2, for example, the user may choose to select only the detector or detectors 13 and 19 on a single specific side 5 in combination with a detector or detectors 16 and 21 on the rear face 8 as requiring activation to initiate call capability. If the user decides to program this setting, then signals derived from detectors 12, 14, 15, 20 and 22 are not used in initiating call capability. The user may program the operation of the detectors and call capability initiation of the handset by keying in a code using the keypad, by stepping through menu options shown on the display 9, for example, or in some other manner.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A communications handset comprising a housing having a plurality of sides, a first detector included on a first side of the plurality and a second detector on a respective different second side of the plurality, the first and second detectors being operative such that, when they are activated substantially simultaneously, call capability of the handset is initiated.

2. The handset as claimed in claim 1 and wherein at least one of the first and second detectors is a sensor responsive to touch.

3. The handset as claimed in claim 2 and wherein the sensor is responsive to human skin conductivity.

4. The handset as claimed in claim 1, 2 or 3 and wherein at least one of the first and second detectors is mechanically activated.

5. The handset as claimed in any preceding claim and wherein, following initiation of call capability, it is unnecessary to maintain activation of the first and second detectors for call capability to continue.

6. The handset as claimed in any preceding claim and wherein the housing is substantially cuboid having a front face with a user keypad and/or touch screen and at least one of the first and second sides is adjacent the front face.

7. The handset as claimed in claim 6 and wherein one of the first and second sides is a rear face on the opposite side of the housing to the front face.

8. The handset as claimed in claim 6 or 7 and wherein the housing has four sides adjacent the front face and including at least one detector in each of the four sides.

9. The handset as claimed in any preceding claim and including a dedicated alarm key for connecting to an emergency service and the alarm key is not operable until the first and second detectors are activated substantially simultaneously to initiate call capability of the handset.

10. The handset as claimed in any preceding claim and including more than two detectors and wherein at least three of the detectors on at least two respective different sides are operative such that, when they are activated substantially simultaneously, call capability of the handset is initiated.

11. The handset as claimed in any preceding claim and including means for the user to select which detectors from those available are operative such that, when they are activated substantially simultaneously, call capability of the handset is initiated.

12. The handset as claimed in any preceding claim and wherein the handset is a mobile telephone handset.
